(19) **Europäisches Patentamt**
**European Patent Office**
**Office européen des brevets**

(11) **EP 3 013 898 B2**

(12) **NEW EUROPEAN PATENT SPECIFICATION**
After opposition procedure

(45) Date of publication and mention
of the opposition decision:
**01.01.2020 Bulletin 2020/01**

(45) Mention of the grant of the patent:
**15.03.2017 Bulletin 2017/11**

(21) Application number: **14731278.9**

(22) Date of filing: **19.06.2014**

(51) Int Cl.:
**C08F 210/16** (2006.01)   **C08F 2/00** (2006.01)

(86) International application number:
**PCT/EP2014/062923**

(87) International publication number:
**WO 2014/206853 (31.12.2014 Gazette 2014/53)**

(54) **POLYETHYLENE COMPOSITION HAVING HIGH IMPACT AND STRESS CRACKING RESISTANCE**

POLYETHYLENZUSAMMENSETZUNG MIT HOHER SCHLAG- UND SPANNUNGSRISSBESTÄNDIGKEIT

COMPOSITION DE POLYÉTHYLÈNE PRÉSENTANT UNE HAUTE RÉSISTANCE À LA FISSURATION SOUS CONTRAINTE ET AUX IMPACTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2013 EP 13173536**

(43) Date of publication of application:
**04.05.2016 Bulletin 2016/18**

(73) Proprietor: **Basell Polyolefine GmbH**
**50389 Wesseling (DE)**

(72) Inventors:
• **MEIER, Gerhardus**
**60320 Frankfurt (DE)**
• **SCHÜLLER, Ulf**
**60486 Frankfurt/M (DE)**

• **DÖTSCH, Diana**
**55545 Bad Kreuznach (DE)**
• **MARCZINKE, Bernd Lothar**
**65929 Frankfurt (DE)**
• **VOGT, Heinz**
**93105 Tegernheim (DE)**

(74) Representative: **Gaverini, Gaetano Luigi Attilio**
**Basell Poliolefine Italia S.r.l.**
**Intellectual Property**
**P.le Donegani, 12**
**44122 Ferrara (IT)**

(56) References cited:
**EP-A1- 1 972 642      EP-A1- 2 072 588**
**WO-A2-2010/139419**

**Description**

FIELD OF THE INVENTION

The present disclosure relates to a polyethylene composition which is suitable for producing protective coatings on metal pipes, particularly steel pipes.

BACKGROUND OF THE INVENTION

Examples of prior art compositions suited for the said use are disclosed in WO2009080207 and WO2012152421.

EP 2 072 588 A1 discloses polyethylene coated metal pipes.

It has now been found that by properly selecting the density and the molecular weights of the composition, an improved balance of impact resistance at low temperatures and Environmental Stress Cracking Resistance (ESCR) is achieved.

An additional and important advantage of the polyethylene composition of the present invention is that it can be melt-processed at unusually high shear rate values, which mean high processing speeds and/or reduced melt-processing temperatures, without encountering flow-instabilities which generally produce unacceptable defects in the final body (e.g. shark skin or melt-fracture), even in the absence of processing aids.

The present invention also relates to a multi-stage polymerization process for preparing the said polyethylene composition.

Thus the present invention provides a polyethylene composition having the following features:

1) density from 0.938 to 0.948 g/cm$^3$, preferably from 0.940 to 0.945 g/cm$^3$, determined according to ISO 1183 at 23°C;
2) ratio MIF/MIP from 15 to 25, in particular from 19 to 23, where MIF is the melt flow index at 190°C with a load of 21.60 kg, and MIP is the melt flow index at 190°C with a load of 5 kg, both determined according to ISO 1133;
3) MIF from 30 to 45 g/10 min., preferably from 35 to 40 g/10 min., more preferably from 35 to 39 g/10 min.;
4) Mz equal to or greater than 1000000 g/mol;
5) long-chain branching index, LCBI, equal to or greater than 0.55, preferably equal to or greater than 0.60;

wherein LCBI is the ratio of the measured mean-square radius of gyration $R_g$, measured by GPC-MALLS, to the mean-square radius of gyration for a linear PE having the same molecular weight.

Mz is preferably greater than 1000000 g/mol, in particular equal to or greater than 1100000 g/mol. Moreover, Mz has preferably an upper limit of 2000000 g/mol., more preferably of 1800000 g/mol, most preferably of 1600000 g/mol. Thus specific and particularly preferred ranges of Mz are:

- from equal to or greater than 1000000 g/mol to 1800000 g/mol, in particular from equal to or greater than 1000000 g/mol to 1600000 g/mol; or, more preferably
- from 1100000 g/mol to 1800000 g/mol, in particular from 1100000 g/mol to 1600000 g/mol.

Preferably, in addition to said features 1) to 5), the polyethylene composition of the inventions also has:

6) eta (0.02) from 25,000 to 35,000 Pa.s, preferably from 28,000 to 33,000 Pa.s, more preferably from 29,000 to 33,000 Pa.s;

wherein eta (0.02) is the complex shear viscosity at an angular frequency of 0.02 rad/s, measured with dynamic oscillatory shear in a plate-plate rotational rheometer at a temperature of 190°C.

BRIEF DESCRIPTION OF THE DRAWINGS

These and other features, aspects, and advantages of the present disclosure will become better understood with reference to the following description and appended claims, and accompanying drawing figures where:

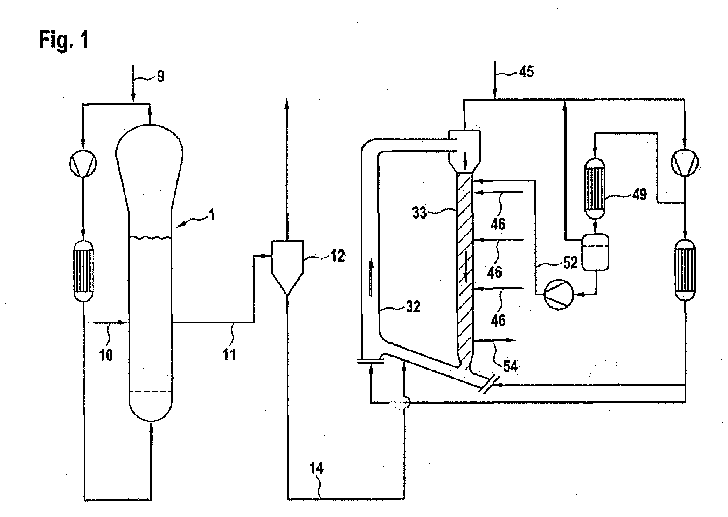

Figure 1 is an illustrative embodiment of a simplified process-flow diagram of two serially connected gas-phase reactors suitable for use in accordance with various embodiments of ethylene polymerization processes disclosed herein to produce various embodiments of the polyethylene compositions disclosed herein.

It should be understood that the various embodiments are not limited to the arrangements and instrumentality shown in the drawing figures.

## DETAILED DESCRIPTION OF THE INVENTION

The expression "polyethylene composition" is intended to embrace, as alternatives, both a single ethylene polymer and an ethylene polymer composition, in particular a composition of two or more ethylene polymer components, preferably with different molecular weights, such composition being also called "bimodal" or "multimodal" polymer in the relevant art. Typically the polyethylene composition of the present invention consists of or comprises one or more ethylene copolymers.

All the features herein defined, comprising the previously defined features 1) to 6), are referred to the said ethylene polymer or ethylene polymer composition. The addition of other components, like the additives normally employed in the art, can modify one or more of said features.

In particular, in the presence of carbon black the density can be increased up to 0.953-0.963 $g/cm^3$.

The ratio MIF/MIP provides a rheological measure of molecular weight distribution. Another measure of the molecular weight distribution is provided by the ratio Mw/Mn, where Mw is the weight average molar mass and Mn is the number average molar mass, both measured by GPC (Gel Permeation Chromatography), as explained in the examples. Preferred Mw/Mn values for the polyethylene composition of the present invention range from 15 to 30, more preferably from 15 to 25.

Moreover the polyethylene composition of the present invention has preferably at least one of the following additional features.

- Mw equal to or lower than 300000 g/mol, more preferably equal to or lower than 250000 g/mol, in particular from 250000 to 180000 g/mol;
- MIP: 1.2 - 2.5 g/10 min.;
- Comonomer content of from 1.5 to 6% by weight, with respect to the total weight of the composition.

The comonomer or comonomers present in the ethylene copolymers are generally selected from olefins having formula $CH_2=CHR$ wherein R is an alkyl radical, linear or branched, having from 1 to 10 carbon atoms.

Specific examples are propylene, butene-1, pentene-1, 4-methylpentene-1, hexene-1, octene-1 and decene-1. A particularly preferred comonomer is hexene-1.

In particular, in a preferred embodiment, the present composition comprises:

A) 40 - 60 % by weight of an ethylene homopolymer or copolymer (the homopolymer being preferred) with density equal to or greater than 0.960 $g/cm^3$ and melt flow index MIE at 190°C with a load of 2.16 kg, according to ISO 1133, of 40 - 250 g/10 min.;

B) 40 - 60 % by weight of an ethylene copolymer having a MIE value lower than the MIE value of A), preferably lower than 0.5 g/10 min.

The above percent amounts are given with respect to the total weight of A) + B).

The amount of comonomer in B) is preferably from 3 to 12 % by weight, with respect to the total weight of B).

As previously said, the present polyethylene composition can be advantageously used for producing protective coatings on metal pipes, particularly steel pipes.

In fact it is preferably characterized by the following properties.

- Tensile Notch Impact (T = -30°C) of 150 $kJ/m^2$ or higher;
- Enviromental stress crack resistance measured by FNCT 4 MPa/80°C > 250 h.

The details of the test methods are given in the examples.

As previously mentioned, the polyethylene composition of the present invention can be melt-processed at surprisingly high values of shear rate, still without undergoing pressure oscillations and flow-instabilities.

While no necessary limitation is known to exist in principle on the kind of polymerization processes and catalysts to be used, it has been found that the polyethylene composition of the present invention can be prepared by a gas phase polymerization process in the presence of a Ziegler-Natta catalyst.

A Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound supported on $MgCl_2$.

Preferred organometallic compounds are the organo-Al compounds.

Thus in a preferred embodiment, the polyethylene composition of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

> a) a solid catalyst component comprising a Ti compound and an electron donor compound ED supported on $MgCl_2$;
> b) an organo-Al compound; and optionally
> c) an external electron donor compound $ED_{ext}$.

Preferably in component a) the ED/Ti molar ratio ranges from 1.5 to 3.5 and the Mg/Ti molar ratio is higher than 5.5, in particular from 6 to 80.

Among suitable titanium compounds are the tetrahalides or the compounds of formula $TiX_n(OR^1)_{4-n}$, where $0 \leq n \leq 3$, X is halogen, preferably chlorine, and $R^1$ is $C_1$-$C_{10}$ hydrocarbon group. The titanium tetrachloride is the preferred compound.

The ED compound is generally selected from alcohol, ketones, amines, amides, nitriles, alkoxysilanes, aliphatic ethers, and esters of aliphatic carboxylic acids.

Preferably the ED compound is selected among amides, esters and alkoxysilanes.

Excellent results have been obtained with the use of esters which are thus particularly preferred as ED compound. Specific examples of esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate. Moreover, are also preferred the aliphatic ethers and particularly the C2-C20 aliphatic ethers, such as tetrahydrofurane (THF) or dioxane.

In the said solid catalyst component the $MgCl_2$ is the basic support, even if minor amount of additional carriers can be used. The $MgCl_2$ can be used as such or obtained from Mg compounds used as precursors that can be transformed into $MgCl_2$ by the reaction with halogenating compounds. Particularly preferred is the use of $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the ASTM-card reference of the spectrum of the non-active halide is diminished in intensity and broadened. In the X-ray spectra of preferred magnesium dihalides in active form said most intense line is diminished in intensity and replaced by a halo whose maximum intensity is displaced towards lower angles relative to that of the most intense line. Particularly suitable for the preparation of the polyethylene composition of the present invention are the catalysts wherein the solid catalyst component a) is obtained by first contacting the titanium compound with the $MgCl_2$, or a precursor Mg compound, optionally in the presence of an inert medium, thus preparing an intermediate product a') containing a titanium compound supported on $MgCl_2$, which intermediate product a') is then contacted with the ED compound which is added to the reaction mixture alone or in a mixture with other compounds in which it represents the main component, optionally in the presence of an inert medium.

With the term "main component" we intend that the said ED compound must be the main component in terms of molar amount, with respect to the other possible compounds excluded inert solvents or diluents used to handle the contact mixture. The ED treated product can then be subject to washings with the proper solvents in order to recover the final product. If needed, the treatment with the ED compound desired can be repeated one or more times.

As previously mentioned, a precursor of $MgCl_2$ can be used as starting essential Mg compound. This can be selected for example among Mg compound of formula $MgR'_2$ where the R' groups can be independently C1-C20 hydrocarbon groups optionally substituted, OR groups, OCOR groups, chlorine, in which R is a C1-C20 hydrocarbon groups optionally substituted, with the obvious proviso that the R' groups are not simultaneously chlorine. Also suitable as precursors are the Lewis adducts between $MgCl_2$ and suitable Lewis bases. A particular and preferred class being constituted by the $MgCl_2$ $(R"OH)_m$ adducts in which R" groups are C1-C20 hydrocarbon groups, preferably C1-C10 alkyl groups, and m is from 0.1 to 6, preferably from 0.5 to 3 and more preferably from 0.5 to 2. Adducts of this type can generally be obtained by mixing alcohol and $MgCl_2$ in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034.

Particularly interesting are the $MgCl_2 \cdot (EtOH)_m$ adducts in which m is from 0.15 to 1.7 obtained subjecting the adducts with a higher alcohol content to a thermal dealcoholation process carried out in nitrogen flow at temperatures comprised between 50 and 150°C until the alcohol content is reduced to the above value. A process of this type is described in EP 395083.

The dealcoholation can also be carried out chemically by contacting the adduct with compounds capable to react with the alcohol groups.

Generally these dealcoholated adducts are also characterized by a porosity (measured by mercury method ) due to pores with radius up to 0.1 $\mu$m ranging from 0.15 to 2.5 $cm^3/g$ preferably from 0.25 to 1.5 $cm^3/g$.

It is preferred that the dealcoholation reaction is carried out simultaneously with the step of reaction involving the use of a titanium compound. Accordingly, these adducts are reacted with the $TiX_n(OR^1)_{4-n}$ compound (or possibly mixtures thereof) mentioned above which is preferably titanium tetrachloride. The reaction with the Ti compound can be carried out by suspending the adduct in $TiCl_4$ (generally cold). The mixture is heated up to temperatures ranging from 80-130°C and kept at this temperature for 0.5-2 hours. The treatment with the titanium compound can be carried out one or more times. Preferably it is repeated twice. It can also be carried out in the presence of an electron donor compound as those mentioned above. At the end of the process the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

As mentioned above, the intermediate product is then brought into contact with the ED compound under conditions able to fix on the solid an effective amount of donor. Due to the high versatility of this method, the amount of donor used can widely vary. As an example, it can be used in molar ratio with respect to the Ti content in the intermediate product ranging from 0.5 to 20 and preferably from 1 to 10. Although not strictly required the contact is typically carried out in a liquid medium such as a liquid hydrocarbon. The temperature at which the contact takes place can vary depending on the nature of the reagents. Generally it is comprised in the range from -10° to 150°C and preferably from 0° to 120°C. It is plane that temperatures causing the decomposition or degradation of any specific reagents should be avoided even if they fall within the generally suitable range. Also the time of the treatment can vary in dependence of other conditions such as nature of the reagents, temperature, concentration etc. As a general indication this contact step can last from 10 minutes to 10 hours more frequently from 0.5 to 5 hours. If desired, in order to further increase the final donor content, this step can be repeated one or more times. At the end of this step the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated or oxygenated hydrocarbons.

As previously mentioned, the said solid catalyst component is converted into catalysts for the polymerization of olefins by reacting it, according to known methods, with an organometallic compound of group 1, 2 or 13 of the Periodic Table of elements, in particular with an Alalkyl compound.

The alkyl-Al compound is preferably chosen among the trialkyl aluminum compounds such as for example triethylaluminum, triisobutylaluminum, tri-n- butylaluminum, tri-n-hexylaluminum, tri-n-octylaluminum. It is also possible to use alkylaluminum halides, alkylaluminum hydrides or alkylaluminum sesquichlorides such as $AlEt_2Cl$ and $Al_2Et_3Cl_3$ optionally in mixture with said trialkyl aluminum compounds.

The external electron donor compound $ED_{ext}$ optionally used to prepare the said Ziegler-Natta catalysts can be equal to or different from the ED used in the solid catalyst component a). Preferably it is selected from the group consisting of ethers, esters, amines, ketones, nitriles, silanes and their mixtures. In particular it can advantageously be selected from the C2-C20 aliphatic ethers and in particulars cyclic ethers preferably having 3-5 carbon atoms such as tetrahydrofurane and dioxane.

Specific examples of the above described Ziegler-Natta catalysts and of methods for their preparation are provided in WO2004106388.

The catalyst can be prepolymerized according to known techniques, by producing reduced amounts of polyolefin, preferably polypropylene or polyethylene. The prepolymerization can be carried out before adding the electron donor compound ED, thus by subjecting to prepolymerization the intermediate product a'). Alternatively it is possible to subject to prepolymerization the solid catalyst component a).

The amount of prepolymer produced can be up to 500 g per g of intermediate product a') or of component a). Preferably it is from 0.5 to 20 g per g of intermediate product a').

The prepolymerization is carried out with the use of a suitable cocatalyst such as organoaluminum compounds that can also be used in combination with an external electron donor compound as discussed above.

It can be carried out at temperatures from 0 to 80°C, preferably from 5 to 70°C, in the liquid or gas phase.

The catalysts wherein the intermediate product a') is subjected to prepolymerization as described above are particularly preferred.

It has been found that by using the above described polymerization catalyst, the polyethylene composition of the present invention can be prepared in a process comprising the following steps, in any mutual order:

a) polymerizing ethylene, optionally together with one or more comonomers, in a gas-phase reactor in the presence of hydrogen;

b) copolymerizing ethylene with one or more comonomers in another gas-phase reactor in the presence of an amount of hydrogen less than step a);

where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer.

In other words, the polymer flows vertically down through the downcomer in a plug flow (packed flow mode), so that only small quantities of gas are entrained between the polymer particles.

Such process allows to obtain from step a) an ethylene polymer with a molecular weight lower than the ethylene copolymer obtained from step b).

Preferably, the polymerization of ethylene to produce a relatively low molecular weight ethylene polymer (step a) is performed upstream the copolymerization of ethylene with a comonomer to produce a relatively high molecular weight ethylene copolymer (step b). To this aim, in step a) a gaseous mixture comprising ethylene, hydrogen and an inert gas is fed to a first gas-phase reactor, preferably a gas-phase fluidized bed reactor. The polymerization is carried out in the presence of the previously described Ziegler-Natta catalyst. Preferably, no comonomer is fed to said first gas phase reactor and a highly crystalline ethylene homopolymer is obtained in step a). However, a minimal amount of comonomer may be fed with the proviso that the degree of copolymerization in step a) is limited so that the density of the ethylene polymer obtained in step a) is not less than 0.960 g/cm$^3$.

Hydrogen is fed in an amount depending on the specific catalyst used and, in any case, suitable to obtain in step a) an ethylene polymer with a melt flow index MIE from 40 - 250 g/10 min. In order to obtain the above MIE range, in step a) the hydrogen/ethylene molar ratio is indicatively from 0.5 to 3, the amount of ethylene monomer being from 8 to 20% by volume, preferably from 10 to 15% by volume, based on the total volume of gas present in the polymerization reactor. The remaining portion of the feeding mixture is represented by inert gases and one or more comonomers, if any. Inert gases which are necessary to dissipate the heat generated by the polymerization reaction are conveniently selected from nitrogen or saturated hydrocarbons, the most preferred being propane.

The operating temperature in the reactor of step a) is selected between 50 and 120°C, preferably between 65 and 100°C, while the operating pressure is between 0.5 and 10 MPa, preferably between 2.0 and 3.5 MPa.

In a preferred embodiment, the ethylene polymer obtained in step a) represents from 40 to 60% by weight of the total ethylene polymer produced in the overall process, i. e. in the first and second serially connected reactors.

The ethylene polymer coming from step a) and the entrained gas are then passed through a solid/gas separation step, in order to prevent the gaseous mixture coming from the first polymerization reactor from entering the reactor of step b) (second gas-phase polymerization reactor). Said gaseous mixture can be recycled back to the first polymerization reactor, while the separated ethylene polymer is fed to the reactor of step b). A suitable point of feeding of the polymer into the second reactor is on the connecting part between the downcomer and the riser, wherein the solid concentration is particularly low, so that the flow conditions are not negatively affected.

The operating temperature in step b) is in the range of 65 to 95°C, and the pressure is in the range of 1.5 to 4.0 MPa. The second gas-phase reactor is aimed to produce a relatively high molecular weight ethylene copolymer by copolymerizing ethylene with one or more comonomers. Furthermore, in order to broaden the molecular weight distribution of the final ethylene polymer, the reactor of step b) can be conveniently operated by establishing different conditions of monomers and hydrogen concentration within the riser and the downcomer.

To this purpose, in step b) the gas mixture entraining the polymer particles and coming from the riser can be partially or totally prevented from entering the downcomer, so to obtain two different gas composition zones. This can be achieved by feeding a gas and/or a liquid mixture into the downcomer through a line placed at a suitable point of the downcomer, preferably in the upper part thereof. Said gas and/or liquid mixture should have a suitable composition, different from that of the gas mixture present in the riser. The flow of said gas and/or liquid mixture can be regulated so that an upward flow of gas counter-current to the flow of the polymer particles is generated, particularly at the top thereof, acting as a barrier to the gas mixture entrained among the polymer particles coming from the riser. In particular, it is advantageous to feed a mixture with low content of hydrogen in order to produce the higher molecular weight polymer fraction in the downcomer. One or more comonomers can be fed to the downcomer of step b), optionally together with ethylene, propane or other inert gases.

The hydrogen/ethylene molar ratio in the downcomer of step b) is comprised between 0.05 and 0.4, the ethylene concentration being comprised from 1 to 20%, preferably 3- 10%, by volume, the comonomer concentration being comprised from 1 to 5% by volume, based on the total volume of gas present in said downcomer. The rest is propane or similar inert gases. Since a very low molar concentration of hydrogen is present in the downcomer, by carrying out the process of the present invention is possible to bond a relatively high amount of comonomer to the high molecular weight polyethylene fraction.

The polymer particles coming from the downcomer are reintroduced in the riser of step b).

The concentration of said comonomer in the riser is in a range of 1 to 5 % by volume, based on the total volume of gas present in said riser. In practice, the comonomer content is controlled in order to obtain the desired density of the final polyethylene. In the riser of step b) the hydrogen/ethylene molar ratio is in the range of 0.04 to 0.4, the ethylene concentration being comprised between 5 and 15 % by volume based on the total volume of gas present in said riser. The rest is propane or other inert gases.

More details on the above described polymerization process are provided in WO9412568.

Apart from the polyethylene, the polyethylene composition of the invention can further comprise additional additives. Such additives are, for example, heat stabilizers, antioxidants, UV absorbers, light stabilizers, metal deactivators, peroxide-decomposing compounds, basic costabilizers, in amounts up to 10% by weight, preferably up to 5% by weight, and also fillers, reinforcing materials, plasticizers, lubricants, emulsifiers, pigments, optical brighteners, flame retardants, antistatics blowing agents, or combinations of these in total amounts of from 0 to 50% by weight, based on the total weight of the mixture.

In particular, the polyethylene composition of the invention can contain carbon black in amounts of from 1 to 5% by weight with respect to the total weight of the composition.

The molding composition of the invention is particularly useful for producing coatings on metal pipes.

The process used for coating metal pipes is well known in the art. It is characterized by comprising a step wherein the polyethylene composition is molten in an extruder at temperatures preferably in the range from 200 to 250°C and then extruded, generally through a nozzle, onto the pipe surface.

Generally the surface of the pipe to be coated is previously cleaned, for instance by sand blasting, and pretreated.

The pretreatment can comprise a chemical treatment, like acid washing, and preferably comprises the application a protective layer, like an epoxy resin, and of an adhesive layer, generally a polyolefin (polyethylene, often in blend with olefin elastomer) containing polar groups, in particular a polyolefin grafted with polar compounds like maleic anhydride.

Thus the composition of the invention can be laid directly on the surface of the pipe or on the pretreated surface of the pipe, in particular on an adhesive layer previously laid on the pipe surface.

The said protective layer can be obtained by powder coating, for example, while the adhesive layer can be laid by extrusion.

The extruders generally used for laying the polyethylene composition of the invention, and also the optional adhesive layer are available in the art.

They can be single or twin screw extruders.

EXAMPLES

The following examples are given to illustrate, without limiting, the present invention. Unless differently stated, the following test methods are used to determine the properties reported in the detailed description and in the examples.

- **Density**

Determined according to ISO 1183 at 23°C.

- **Molecular Weight Distribution Determination**

The determination of the molar mass distributions and the means Mn, Mw, Mz and Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used. The solvent was vacuum destilled under Nitrogen and was stabilized with 0.025% by weight of 2,6-di-tert-butyl-4-methylphenol. The flowrate used was 1 ml/min, the injection was $500\mu$l and polymer concentration was in the range of 0.01 % < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane. The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

### - Complex shear viscosity

Measured at angular frequency of 0.02 rad/s and 190°C as follows.

Samples are melt-pressed for 4 min under 200 °C and 200 bar into plates of 1mm thickness. Disc specimens of a diameter of 25 mm are stamped and inserted in the rheometer, which is pre-heated at 190 °C. The measurement can be performed using any rotational rheometer commercially available. Here the Anton Paar MCR 300 is utilized, with a plate-plate geometry. A so-called frequency-sweep is performed (after 4 min of annealing the sample at the measurement temperature) at T = 190 °C, under constant strain-amplitude of 5%, measuring and analyzing the stress response of the material in the range of excitation frequencies $\omega$ from 670 to 0.02 rad/s. The standardized basic software is utilized to calculate the rheological properties, i.e. the storage-modulus, G', the loss-modulus, G", the phase lag $\delta$ (=arctan(G"/G')) and the complex viscosity, $\eta^*$, as a function of the applied frequency, namely $\eta^*(\omega) = [G'(\omega)^2 + G"(\omega)^2]^{1/2}/\omega$. The value of the latter at an applied frequency $\omega$ of 0.02 rad/s is the eta (0.02).

### - Melt flow index

Determined according to ISO 1133 at 190°C with the specified load.

### - Long Chain Branching index (LCBI)

The LCB index corresponds to the branching factor g', measured for a molecular weight of $10^6$ g/mol. The branching factor g', which allows determining long-chain branches at high Mw, was measured by Gel Permeation Chromatography (GPC) coupled with Multi-Angle Laser-Light Scattering (MALLS), as described in the following. The parameter g' is the ratio of the measured mean square radius of gyration to that of a linear polymer having the same molecular weight. Linear molecules show g' of 1, while values less than 1 indicate the presence of LCB. Values of g' as a function of mol. weight, M, were calculated from the equation:

$$g'(M) = <Rg^2>_{sample,M}/<Rg^2>_{linear\ ref.,M}$$

where $<Rg^2>$,M is the root-mean-square radius of gyration for the fraction of mol. weight M.

The radius of gyration for each fraction eluted from the GPC (as described above but with a flow-rate of 0.6 ml/min and a column packed with $30\mu$m particles) is measured by analyzing the light scattering at the different angles. Therefore, from this MALLS setup it is possible to determine mol. weight M and $<Rg^2>_{Sample,M}$ and to define a g' at a measured M = $10^6$ g/mol. The $<Rg^2>_{linear\ ref.,M}$ is calculated by the established relation between radius-of-gyration and molecular weight for a linear polymer in solution (Zimm and Stockmayer WH 1949)) and confirmed by measuring a linear PE reference with the same apparatus and methodology described.

The same protocol is described in the following documents.

Zimm BH, Stockmayer WH (1949) The dimensions of chain molecules containing branches and rings. J Chem Phys 17

Rubinstein M., Colby RH. (2003), Polymer Physics, Oxford University Press

### - Comonomer content

The comonomer content is determined by means of IR in accordance with ASTM D 6248 98, using an FT-IR spectrometer Tensor 27 from Bruker, calibrated with a chemometric model for determining ethyl- or butyl- side-chains in PE for butene or hexene as comonomer, respectively. The result is compared to the estimated comonomer content derived from the mass-balance of the polymerization process and was found to be in agreement.

### - Notched Tensile Impact Test

The tensile-impact strength is determined using ISO 8256:2004 with type 1 double notched specimens according to method A. The test specimens (4 x 10 x 80 mm) are cut form a compression molded sheet which has been prepared according ISO 1872-2 requirements (average cooling rate 15 K/min and high pressure during cooling phase). The test specimens are notched on two sides with a 45° V-notch. Depth is $2 \pm 0.1$ mm and curvature radius on notch dip is $1.0 \pm 0.05$ mm. The free length between grips is $30 \pm 2$ mm. Before measurement, all test specimens are conditioned at a constant temperature of -30°C over a period of from 2 to 3 hours. The procedure for measurements of tensile impact strength including energy correction following method A is described in ISO 8256.

### - Environmental stress cracking resistance according to full notch creep test (FNCT)

The environmental stress cracking resistance of polymer samples is determined in accordance to international standard ISO 16770 (FNCT) in aqueous surfactant solution. From the polymer sample a compression moulded 10 mm thick sheet has been prepared. The bars with squared cross section (10x10x100 mm) are notched using a razor blade on four sides perpendicularly to the stress direction. A notching device described in M. Fleissner in Kunststoffe 77 (1987), pp. 45 is used for the sharp notch with a depth of 1.6 mm. The load applied is calculated from tensile force divided by the initial ligament area. Ligament area is the remaining area = total cross-section area of specimen minus the notch area. For FNCT specimen: $10x10$ mm$^2$ - 4 times of trapezoid notch area = 46.24 mm$^2$ (the remaining cross-section for the failure process / crack propagation). The test specimen is loaded with standard condition suggested by the ISO 16770 with constant load of 4 MPa at 80°C in a 2% (by weight) water solution of non-ionic surfactant ARKOPAL N100. Time until rupture of test specimen is detected.

Example 1 and Comparative Examples 1 and 2

- Process Setup

In Example 1 the process of the invention was carried out under continuous conditions in a plant comprising two serially connected gas-phase reactors, as shown in Figure 1.

Example 1

The solid catalyst component was prepared as described in Example 15 of WO2004106388.

Polymerization

20 g/h of the prepolymerized solid catalyst component prepared as described above were fed, using 5 kg/h of liquid propane, to a precontacting apparatus, in which also triethylaluminum (TEA) was dosed. The weight ratio between aluminum alkyl and solid catalyst component was 3:1. The precontacting step was carried out under stirring at 50°C with a total residence time of 120 minutes.

The catalyst enters the first gas-phase polymerization reactor 1 of Fig. 1 via line 10. In the first reactor ethylene was polymerized using H$_2$ as molecular weight regulator and in the presence of propane as inert diluent. 40 kg/h of ethylene and 130 g/h of hydrogen were fed to the first reactor via line 9. No comonomer was fed to the first reactor.

The polymerization was carried out at a temperature of 80°C and at a pressure of 2.9 MPa. The polymer obtained in the first reactor was discontinuously discharged via line 11, separated from the gas into the gas/solid separator 12, and reintroduced into the second gas-phase reactor via line 14.

The polymer produced in the first reactor had a melt index MIE of about 80 g/10 min and a density of 0.969 kg/dm$^3$.

The second reactor was operated under polymerization conditions of about 80°C, and a pressure of 2.5 MPa. 16 kg/h of ethylene, 1 g/h of hydrogen and 4.3 kg/h of 1-hexene were introduced in the downcomer 33 of the second reactor via line 46. 5 kg/h of propane, 18 kg/h of ethylene and 2 g/h of hydrogen were fed through line 45 into the recycling system.

In order to broaden the molecular weight distribution of the final ethylene polymer, the second reactor was operated by establishing different conditions of monomers and hydrogen concentration within the riser 32 and the downcomer 33. This is achieved by feeding via line 52, 75 kg/h of a liquid stream (liquid barrier) into the upper part of the downcomer 33. Said liquid stream has a composition different from that of the gas mixture present in the riser. Said different concentrations of monomers and hydrogen within the riser, the downcomer of the second reactor and the composition of the liquid barrier are indicated in Table 1. The liquid stream of line 52 comes from the condensation step in the condenser 49, at working conditions of 50°C and 2.5 MPa, wherein a part of the recycle stream is cooled and partially condensed. As shown in the figure, a separating vessel and a pump are placed, in the order, downstream the condenser 49. The final polymer was discontinuously discharged via line 54.

The polymerization process in the second reactor produced relatively high molecular weight polyethylene fractions. In Table 1 the properties of the final product are specified. It can be seen that the melt index of the final product is decreased as compared to the ethylene resin produced in the first reactor, showing the formation of high molecular weight fractions in the second reactor.

The first reactor produced around 51 % by weight (split wt %) of the total amount of the final polyethylene resin produced by both first and second reactors. At the same time, the obtained polymer is endowed with a relatively broad molecular weight distribution as witnessed by a ratio MIF/MIP equal to 20.

Comparative Example 1

The polymer of this comparative example is a Ziegler-Natta polyethylene composition, available on the market with the commercial name Petrothene LR 5280 E (Equistar).

Comparative Example 2

The polymer of this comparative example is a Ziegler-Natta polyethylene composition containing carbon black, available on the market with the commercial name H E3450 (Borealis).

Table 1

| | Ex. 1 | Comp. 1 | Comp. 2 |
|---|---|---|---|
| Operative conditions first reactor | | | |
| $H_2/C_2H_4$ Molar ratio | 2.2 | - | - |
| $C_2H_4$% | 10.3 | - | - |
| Split (wt%) | 51 | - | - |
| | | | |
| Operative conditions second reactor | | | |
| $H_2/C_2H_4$ Molar ratio riser | 0.08 | - | - |
| $C_2H_4$% riser | 8.3 | - | - |
| $C_6H_{12}$ %riser | 1.9 | - | - |
| $H_2/C_2H_4$ Molar ratio downcomer | 0.12 | - | - |
| $C_2H_4$% downcomer | 3.8 | - | - |
| $C_6H_{12}$ % downcomer | 2.18 | - | - |
| $H_2/C_2H_4$ Molar ratio barrier | 0.010 | - | - |
| $C_2H_4$% barrier | 5.1 | - | - |
| $C_6H_{12}$ % barrier | 3.1 | - | - |
| | | | |
| Final Polymer properties | | | |
| MIP [5 kg] (g/10 min.) | 1.9 | 1.2 | 1.9 |
| MIF [21.6 kg] (g/10 min.) | 38 | 28 | 40 |
| MIF/MIP | 20 | 23 | 22 |
| Density (g/cm$^3$) | 0.943 | 0.950 | 0.949 |
| Mw [g/mol] | 211114 | 236463 | 187561 |
| Mz [g/mol] | 1232440 | 1095640 | 729704 |

(continued)

| Final Polymer properties | | | |
|---|---|---|---|
| Mw/Mn | 21 | 23.09 | 30.28 |
| LCBI | 0.63 | 0.63 | 0.62 |
| Comonomer content IR [% by weight] | 3.7 | - | - |
| Eta (0.02) | 31100 | 44900 | 28000 |
| Tensile Notch Impact T = -30°C [kJ/m$^2$] | 155 | 84 | - |
| FNCT 4 MPa/80°C (hours)* | 257 | 51.5 | 120 |
| Notes : $C_2H_4$= ethylene; $C_6H_{12}$= hexene; *aqueous solution of 2% Arkopal N100 | | | |

**Claims**

1. Polyethylene composition having the following features:

   1) density from 0.938 to 0.948 g/cm$^3$, preferably from 0.940 to 0.945 g/cm$^3$, determined according to ISO 1183 at 23°C;
   2) ratio MIF/MIP from 15 to 25, in particular from 19 to 23, where MIF is the melt flow index at 190°C with a load of 21.60 kg, and MIP is the melt flow index at 190°C with a load of 5 kg, both determined according to ISO 1133;
   3) MIF from 30 to 45 g/10 min., preferably from 35 to 40 g/10 min., more preferably from 35 to 39 g/10 min.;
   4) Mz equal to or greater than 1000000 g/mol;
   5) long-chain branching index, LCBI, equal to or greater than 0.55, preferably equal to or greater than 0.60;

   wherein LCBI is the ratio of the measured mean-square radius of gyration $R_g$, measured by GPC-MALLS, to the mean-square radius of gyration for a linear PE having the same molecular weight.

2. The polyethylene composition of claim 1, additionally having:
   6) eta (0.02) from 25,000 to 35,000 Pa.s, preferably from 28,000 to 33,000 Pa.s, more preferably from 29,000 to 33,000 Pa.s;
   wherein eta (0.02) is the complex shear viscosity at an angular frequency of 0.02 rad/s, measured with dynamic oscillatory shear in a plate-plate rotational rheometer at a temperature of 190°C.

3. The polyethylene composition of claims 1 and 2, consisting of or comprising one or more ethylene copolymers.

4. The polyethylene composition of claim 3, having a comonomer content of 1.5 to 6% by weight.

5. The polyethylene composition of claims 1 to 3, obtainable by using a Ziegler-Natta polymerization catalyst.

6. The polyethylene composition of claim 5, wherein the Ziegler-Natta polymerization catalyst comprises the product of reaction of:

   a) a solid catalyst component comprising a Ti compound supported on $MgCl_2$, said component being obtained by contacting the titanium compound with the $MgCl_2$, or a precursor Mg compound, optionally in the presence of an inert medium, thus obtaining an intermediate product a'), then subjecting a') to prepolymerization and contact with an electron donor compound;
   b) an organo-Al compound; and optionally
   c) an external electron donor compound.

7. The polyethylene composition of claim 1, having at least one of the following additional features:

   - Mw equal to or lower than 300000 g/mol, more preferably equal to or lower than 250000 g/mol, in particular from 250000 to 180000 g/mol;
   - Mw/Mn from 15 to 30, preferably from 15 to 25;
   - MIP: 1.2 - 2.5 g/10 min.

8.  The polyethylene composition of claim 1, comprising:

    A) 40 - 60 % by weight of an ethylene homopolymer or copolymer with density equal to or greater than 0.960 g/cm$^3$ and melt flow index MIE at 190°C with a load of 2.16 kg, according to ISO 1133, of 40 - 250 g/10 min.;
    B) 40 - 60 % by weight of an ethylene copolymer having a MIE value lower than the MIE value of A), preferably lower than 0.5 g/10 min.

9.  Process for coating metal pipes, comprising a step wherein the polyethylene composition of claim 1 is molten in an extruder and then extruded onto the pipe surface, said pipe surface being optionally pretreated.

10. Metal pipes coated with the polyethylene composition of claim1.

11. Process for preparing the polyethylene composition of claim 1, wherein all the polymerization steps are carried out in the presence of a Ziegler-Natta polymerization catalyst supported on MgCl$_2$.

12. The process of claim 11, comprising the following steps, in any mutual order:

    a) polymerizing ethylene, optionally together with one or more comonomers, in a gas-phase reactor in the presence of hydrogen;
    b) copolymerizing ethylene with one or more comonomers in another gas-phase reactor in the presence of an amount of hydrogen less than step a);

    where in at least one of said gas-phase reactors the growing polymer particles flow upward through a first polymerization zone under fast fluidization or transport conditions, leave said riser and enter a second polymerization zone through which they flow downward under the action of gravity, leave said second polymerization zone and are reintroduced into the first polymerization zone, thus establishing a circulation of polymer between said two polymerization zones.

**Patentansprüche**

1.  Polyethylenzusammensetzung mit den folgenden Merkmalen:

    1) Dichte von 0,938 bis 0,948 g/cm$^3$, vorzugsweise von 0,940 bis 0,945 g/cm$^3$, bestimmt gemäß ISO 1183 bei 23°C;
    2) MIF/MIP-Verhältnis von 15 bis 25, insbesondere von 19 bis 23, wobei MIF der Schmelzfließindex bei 190 °C mit einer Last von 21,60 kg ist, und MIP der Schmelzfließindex bei 190 °C mit einer Last von 5 kg ist, wobei beide gemäß ISO 1133 bestimmt sind;
    3) MIF von 30 bis 45 g/10 min., vorzugsweise von 35 bis 40 g/10 min., bevorzugter von 35 bis 39 g/10 min.;
    4) Mz gleich oder größer als 1000000 g/mol;
    5) langkettiger Verzweigungsindex, LCBI, gleich oder größer als 0,55, vorzugsweise gleich oder größer als 0,60;

    wobei der LCBI das Verhältnis des gemessenen mittleren quadratischen Trägheitsradius, T$_g$, gemessen mittels GPC-MALLS, zu dem mittleren quadratischen Trägheitsradius eines linearen PE mit dem gleichen Molekulargewicht ist.

2.  Polyethylenzusammensetzung nach Anspruch 1, die zusätzlich aufweist:
    6) eta (0,02) von 25.000 bis 35.000 Pa·s, vorzugsweise von 28.000 bis 33.000 Pa·s, bevorzugter 29.000 bis 33.000 Pa·s;
    wobei eta (0,02) die komplexe Scherviskosität mit einer Winkelfrequenz von 0,02 rad/s ist, gemessen durch dynamische oszillatorische Scherung in einem Platten-Platten-Rotationsrheometer bei einer Temperatur von 190 °C.

3.  Polyethylenzusammensetzung nach den Ansprüchen 1 und 2, bestehend aus oder umfassend ein oder mehrere Ethylencopolymere.

4.  Polyethylenzusammensetzung nach Anspruch 3 mit einem Comonomergehalt von 1,5 bis 6 Gew.%.

5.  Polyethylenzusammensetzung nach den Ansprüchen 1 bis 3, die unter Verwendung eines Ziegler-Natta-Polymerisationskatalysators erhältlich ist.

6.  Polyethylenzusammensetzung nach Anspruch 5, wobei der Ziegler-Natta-Polymerisationskatalysator das Reaktionsprodukt von:

    a) einer festen Katalysatorkomponente, die eine auf $MgCl_2$ geträgerte Ti-Verbindung umfasst, wobei die Komponente erhältlich ist, indem die Titanverbindung mit dem $MgCl_2$ oder einer Vorläufer-Mg-Verbindung kontaktiert wird, gegebenenfalls in Gegenwart eines inerten Mediums, wodurch ein Zwischenprodukt a') erhalten wird, dann a') Präpolymerisation und Kontakt mit einer Elektronendonorverbindung unterzogen wird;
    b) einer Organo-Al-Verbindung und gegebenenfalls
    c) einer externen Elektronendonorverbindung umfasst.

7.  Polyethylenzusammensetzung nach Anspruch 1 mit mindestens einem der folgenden zusätzlichen Merkmale:

    • Mw gleich oder kleiner als 300000 g/mol, bevorzugter gleich oder kleiner als 250000 g/mol, insbesondere 250000 bis 180000 g/mol;
    • Mw/Mn von 15 bis 30, vorzugsweise von 15 bis 25;
    • MIP: 1,2 - 2,5 g/10 min.

8.  Polyethylenzusammensetzung nach Anspruch 1, umfassend:

    A) 40 - 60 Gew.% eines Ethylenhomopolymers oder -copolymers mit einer Dichte gleich oder größer als 0,960 $g/cm^3$ und einem Schmelzfließindex MIE bei 190 °C mit einer Last von 2,16 kg gemäß ISO 1133 von 40 - 250 g/10 min.;
    B) 40 - 60 Gew.% eines Ethylencopolymers mit einem MIE-Wert unter dem MIE-Wert von A), vorzugsweise unter 0,5 g/10 min.

9.  Verfahren zum Beschichten von Metallrohren, umfassend einen Schritt, bei dem die Polyethylenzusammensetzung gemäß Anspruch 1 in einem Extruder geschmolzen und dann auf die Rohroberfläche extrudiert wird, wobei die Rohroberfläche gegebenenfalls vorbehandelt ist.

10. Metallrohre, die mit der Polyethylenzusammensetzung nach Anspruch 1 beschichtet sind.

11. Verfahren zum Herstellen der Polyethylenzusammensetzung nach Anspruch 1, wobei alle der Polymerisationsschritte in Gegenwart eines auf $MgCl_2$ geträgerten Ziegler-Natta-Polymerisationskatalysators durchgeführt werden.

12. Verfahren nach Anspruch 11, umfassend die folgenden Schritte in beliebiger Reihenfolge:

    a) Polymerisieren von Ethylen, gegebenenfalls zusammen mit einem oder mehreren Comonomeren, in einem Gasphasenreaktor in Gegenwart von Wasserstoff;
    b) Copolymerisieren von Ethylen mit einem oder mehreren Comonomeren in einem anderen Gasphasenreaktor in Gegenwart einer Menge an Wasserstoff, die unter derjenigen in Schritt a) liegt;

    wobei in mindestens einem der Gasphasenreaktoren die wachsenden Polymerpartikel durch eine erste Polymerisationszone hindurch unter raschen Verwirbelungs- oder Transportbedingungen aufwärts fließen, das Steigrohr verlassen und in eine zweite Polymerisationszone eintreten, durch die hindurch sie unter Einwirken der Schwerkraft abwärts fließen, die zweite Polymerisationszone verlassen und erneut in die erste Polymerisationszone eingebracht werden, wodurch eine Polymerzirkulation zwischen den beiden Polymerisationszonen eingerichtet wird.

**Revendications**

1.  Composition de polyéthylène présentant les caractéristiques suivantes :

    1) densité de 0,938 à 0,948 $g/cm^3$, de préférence de 0,940 à 0,945 $g/cm^3$, déterminée selon la norme ISO 1183 à 23°C ;
    2) rapport MIF/MIP de 15 à 25, en particulier de 19 à 23, où MIF est l'indice de fluidité à chaud à 190°C sous une charge de 21,60 kg et MIP est l'indice de fluidité à chaud à 190°C sous une charge de 5 kg, tous deux déterminés selon la norme ISO 1133 ;

3) un MIF de 30 à 45 g/10 min, de préférence de 35 à 40 g/10 min, plus préférablement de 35 à 39 g/10 min ;

4) un Mz égal ou supérieure à 1.000.000 g/mole ;

5) un indice de ramification à longue chaîne, LCBI égal ou supérieur à 0,55, de préférence égal ou supérieur à 0,60 ;

LCBI étant le rapport du rayon de giration quadratique moyen mesuré $R_g$, mesuré par CPG-MALLS, au rayon de giration quadratique moyen pour du PE linéaire présentant le même poids moléculaire.

2. Composition de polyéthylène selon la revendication 1, comprenant en plus :

6) un êta(0,02) de 25.000 à 35.000 Pa.s, de préférence de 28.000 à 33.000 Pa.s,

plus préférablement de 29.000 à 33.000 Pa.s ;

êta(0,02) étant la viscosité de cisaillement complexe à une fréquence angulaire de 0,02 rad/s, mesurée par un cisaillement oscillatoire dynamique dans un rhéomètre rotatif plaque-plaque à une température de 190°C.

3. Composition de polyéthylène selon les revendications 1 et 2, constituée par ou comprenant un ou plusieurs copolymères d'éthylène.

4. Composition de polyéthylène selon la revendication 3, présentant une teneur en comonomères de 1,5 à 6% en poids.

5. Composition de polyéthylène selon les revendications 1 à 3, pouvant être obtenue par l'utilisation d'un catalyseur de polymérisation de type Ziegler-Natta.

6. Composition de polyéthylène selon la revendication 5, le catalyseur de polymérisation de type Ziegler-Natta comprenant le produit de réaction de :

a) un constituant catalytique solide comprenant un composé à base de Ti supporté sur du $MgCl_2$, ledit constituant étant obtenu par mise en contact du composé à base de titane avec du $MgCl_2$, ou avec un composé précurseur à base de Mg, éventuellement en présence d'un milieu inerte, ce qui permet d'obtenir un produit intermédiaire a'), puis par soumission de a') à une prépolymérisation et à une mise en contact avec un composé donneur d'électrons;

b) un composé organique de l'Al ; et éventuellement

c) un composé donneur d'électrons externe.

7. Composition de polyéthylène selon la revendication 1, présentant au moins l'une des caractéristiques supplémentaires suivantes :

- Mw égal ou inférieur à 300.000 g/mole, plus préférablement égal ou inférieur à 250.000 g/mole, en particulier de 250.000 à 180.000 g/mole ;

- Mw/Mn de 15 à 30, de préférence de 15 à 25 ;

- MIP : 1,2 - 2,5 g/10 min.

8. Composition de polyéthylène selon la revendication 1, comprenant :

A) 40 - 60% en poids d'un homopolymère ou d'un copolymère d'éthylène présentant une densité égale ou supérieure à 0,960 $g/cm^3$ et un indice de fluidité à chaud MIE à 190°C sous une charge de 2,16 kg, selon la norme ISO 1133, de 40 - 250 g/10 min. ;

B) 40 - 60% en poids d'un copolymère d'éthylène présentant une valeur de MIE inférieure à la valeur de MIE de A), de préférence inférieure à 0,5 g/10 min.

9. Procédé pour le revêtement de tuyaux métalliques, comprenant une étape dans laquelle la composition de polyéthylène selon la revendication 1 est fondue dans une extrudeuse, puis extrudée sur la surface du tuyau, ladite surface du tuyau étant éventuellement prétraitée.

10. Tuyaux métalliques revêtus par la composition de polyéthylène selon la revendication 1.

11. Procédé pour la préparation de la composition de polyéthylène selon la revendication 1, toutes les étapes de polymérisation étant effectuées en présence d'un catalyseur de polymérisation de type Ziegler-Natta supporté sur

du MgCl$_2$.

**12.** Procédé selon la revendication 11, comprenant les étapes suivantes consistant à, dans un quelconque ordre mutuel :

a) polymériser de l'éthylène, éventuellement ensemble avec un ou plusieurs comonomères, dans un réacteur à phase gazeuse en présence d'hydrogène ;
b) copolymériser de l'éthylène avec un ou plusieurs comonomères dans un autre réacteur à phase gazeuse en présence d'une quantité d'hydrogène inférieure à celle dans l'étape a) ;

où, dans au moins un desdits réacteurs à phase gazeuse, les particules croissantes de polymère s'écoulent vers le haut à travers une première zone de polymérisation dans des conditions de fluidisation ou de transport rapide, quittent ledit élévateur et entrent dans une deuxième zone de polymérisation, à travers laquelle elles s'écoulent vers le bas sous l'action de la gravité, quittent ladite deuxième zone de polymérisation et sont réintroduites dans la première zone de polymérisation, établissant ainsi une circulation du polymère entre lesdites deux zones de polymérisation.

**Fig. 1**

EP 3 013 898 B2

**EP 3 013 898 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009080207 A
- WO 2012152421 A
- EP 2072588 A1
- US 4298718 A
- US 4495338 A
- US 4469648 A
- US 4399054 A
- WO 9844009 A
- US 5100849 A
- US 4829034 A
- EP 395083 A
- WO 2004106388 A
- WO 9412568 A

**Non-patent literature cited in the description**

- **D. GELDART.** Gas Fluidisation Technology. J. Wiley & Sons Ltd, 1986, 155
- **BENOIT H. ; REMPP P. ; GRUBISIC Z.** J. Polymer Sci., Phys. 1967, vol. 753
- **ZIMM BH ; STOCKMAYER WH.** The dimensions of chain molecules containing branches and rings. *J Chem Phys,* 1949, vol. 17
- **RUBINSTEIN M. ; COLBY RH.** Polymer Physics. Oxford University Press, 2003
- **M. FLEISSNER.** *Kunststoffe,* 1987, vol. 77, 45